# EUROPEAN PATENT SPECIFICATION

(11) **EP 2 461 403 B1**
(45) Date of publication and mention of the grant of the patent: **27.07.2016**
(21) Application number: 09847856.3
(22) Date of filing: 04.08.2009
(51) Int. Cl.: H01M 8/02, H01M 8/24, H01M 8/10

(54) **AIR-COOLED METAL SEPARATOR FOR FUEL CELL AND FUEL CELL STACK USING SAME**
LUFTGEKÜHLTER METALLABSCHEIDER FÜR EINE BRENNSTOFFZELLE UND BRENNSTOFFZELLENSTAPEL DAMIT
SÉPARATEUR MÉTALLIQUE REFROIDI PAR AIR POUR PILE À COMBUSTIBLE ET EMPILEMENT DE PILE À COMBUSTIBLE L'UTILISANT

(30) Priority: 31.07.2009 KR 20090071019
(43) Date of publication of application: 06.06.2012
(73) Proprietor: Hyundai Steel Company, Metropolitan City (KR)
(72) Inventor: KIM, Ki-Jung, Yongin-si Gyeonggi-do 448-755 (KR); JEON, Yoo-Taek, Yongin-si Gyeonggi-do 446-721 (KR)
(74) Representative: Winter, Brandl, Fürniss, Hübner, Röss, Kaiser, Polte - Partnerschaft mbB
(86) International application number: PCT/KR2009/004356
(87) International publication number: WO 2011/013868

(56) References cited:
- WO-A1-2008/047989
- WO-A1-2009/010066
- WO-A1-2009/024345
- JP-A- 2006 179 404
- JP-A- 2008 146 843
- US-A- 5 846 668
- US-A1- 2001 033 956
- US-A1- 2009 092 866

## Description

### Technical Field

The present invention relates to a metal separator for a fuel cell and, more particularly, to an air-cooled metal separator which does not need supply of cooling water by adopting air-cooling and may include a non-continuous gasket for supporting a flow passage of air and the separator.

### Background Art

A fuel cell is an electrochemical cell that converts chemical energy produced by oxidation of fuel into electrical energy. Recently, various investigations have focused on development of fuel cells, solar cells, and the like in order to overcome problems such as consumption of fossil fuels, the greenhouse effect and global warming caused by carbon dioxide, and the like.

Fuel cells generally convert chemical energy into electrical energy through oxidation and reduction of hydrogen and oxygen. In the fuel cell, hydrogen is oxidized into hydrogen ions and electrons at an anode, and the hydrogen ions diffuse to a cathode through an electrolyte. The electrons travel to the cathode through a circuit. At the cathode, water is produced through reduction of the hydrogen ions, electrons, and oxygen.

In general, since a unit cell of a fuel cell generates too low a voltage to be used alone in practice, the fuel cell has several to several hundred unit cells stacked therein. When stacking the unit cells, a separator is used to facilitate electrical connection between unit cells and to separate reaction gases. Typically, an assembly of plural unit cells connected to each other is referred to as a fuel cell stack.

A conventional separator for fuel cells is manufactured by milling graphite according to the shape of a flow passage. In this case, the graphite separators in the stack represent 50% of the total manufacturing costs and 80% of the total weight of the stack. Accordingly, the graphite separator has problems of high manufacturing costs and large volume.

To solve such problems of the graphite separator, metal separators have been developed. Metal separators have many advantages, such as easy processibility, low manufacturing costs, and the like.

A metal separator for fuel cells will be described hereinafter.

First, a reaction gas channel and a cooling water channel are formed in the middle of a rectangular metal plate, and a gasket is formed to surround the periphery of the plate. The reaction gas channel and the cooling water channel are typically referred to as a channel section. Typically, the reaction gas channel is formed to protrude from a rear surface of the metal plate by stamping the metal plate, and the cooling water channel is formed using a region between the reaction gas channels protruding from the rear surface of the metal plate. The channel section is configured to allow reaction gas to flow on the front surface of the metal plate while allowing cooling water to flow on the rear surface of the metal plate. In this point of view, the front surface of the metal plate may be called a reaction gas flow surface and the rear surface of the metal plate may be called a cooling water flow surface.

The metal separator having such configuration is a water-cooled metal separator, wherein cooling water is introduced into a cooling water inflow manifold at one side of the channel section and removes heat, caused by activation loss in operation of a fuel cell, reduction at the cathode, Joule heating, and the like, while passing through the cooling water channel. After cooling the separator, the cooling water is discharged from the separator through a cooling water discharge manifold at the other side of the channel section.

Such a water-cooled metal separator requires continuous supply of cooling water in order to remove heat generated during operation of the fuel cell. In this case, the fuel cell requires various devices for supply of cooling water, such as a pump, a deionizer, a heat exchanger, and the like, causing an increase in manufacturing costs of the fuel cell and a system. Various studies have been made to develop an air-cooled metal separator which can overcome such problems of the water-cooled metal separator.

For a conventional air-cooled separator, an inlet/outlet port for air is formed by machining a cooling surface of a graphite separator. In this case, however, the separator has drawbacks of a large thickness and a large stack volume.

Further, when the air-cooled separator is fabricated by shaping a metal sheet, it is difficult to form a separate passage for a cooling medium.

Therefore, there is a need for a method of forming a structure for smooth flow of air as a cooling medium in a manufacturing process.
An air-cooled metal separator for fuel cell according to the preamble of independent claim 1 of the present invention is known from US 5 846 668 A. A bipolar plate in combination with a sealant for a PEM fuel cell is known from WO 2009 / 010066
A1. Said bipolar plate has an anode side with first flow channels and a cathode side with second flow channels. A sealant is provided parallel with the bipolar plate and has flow channels across the sealant. Further, documents WO 2008 / 047989 A1 and WO 2009 / 024345 A1 disclose fuel cell stacks with coolant, respectively.

### Disclosure

### Technical Problem

The present invention is directed to providing an air-cooled metal separator for a fuel cell, which can be cooled by air through a discontinuous gasket structure without using cooling water during operation of the fuel cell.

The present invention is also directed to providing a fuel cell stack, in which the air-cooled metal separators and a membrane electrode assembly (MEA) are sequentially stacked to provide an efficient cooling structure.

### Technical Solution

In accordance with an aspect of the present invention, an air-cooled metal separator for a fuel cell includes: a channel section formed in the middle of a metal plate and including a reaction gas channel depressed into a front surface of the metal plate to protrude from a rear surface thereof and an air channel defined between the reaction gas channels protruding from the rear surface of the metal plate; a first gasket continuously formed along a rim of a front surface of the channel section; and a second gasket discontinuously formed along a rim of a rear surface of the channel section to allow a discontinuous portion of the second gasket to provide a flow passage of air.

The metal plate may be formed at opposite sides thereof with reaction gas manifolds each being formed with an opening and including a reaction gas inflow manifold through which a reaction gas is introduced into the reaction gas channel, and a reaction gas discharge manifold through which the reaction gas is discharged outside from the reaction gas channel, and the metal separator may further include a third gasket continuously formed along a rim of each of the front and rear surfaces of the reaction gas inflow manifold and the reaction gas discharge manifold.

In accordance with another aspect of the invention, a fuel cell stack includes the air-cooled metal separators described above and a membrane electrode assembly (MEA) sequentially stacked one above another.

### Advantageous Effects

According to some embodiments, the air-cooled metal separator allows air cooling through a noncontinuous gasket and does not need cooling water for removal of heat generated during operation of a fuel cell.

Further, , the fuel cell stack may include the air-cooled metal separators according to the embodiment and a membrane electrode assembly (MEA) sequentially stacked one above another, in which a discontinuous gasket is disposed on an air flow surface of the air-cooled metal separator to prevent deformation of a metal body and secure an air flow passage, thereby providing an efficient cooling structure.

### Description of Drawing

Fig. 1 to Fig. 4 are schematic sectional views of an air-cooled metal 5 separator for a fuel cell in accordance with one exemplary embodiment of the present invention;
Fig. 5 to Fig. 6 are a top view and a bottom view of an air-cooled metal separator in accordance with one exemplary embodiment of the present invention; and
Fig. 7 to Fig. 10 are sectional views of fuel cell stacks including air-cooled metal separators according to exemplary embodiments of the present invention.Mode for Invention

Exemplary embodiments of the present invention will now be described in detail with reference to the accompanying drawings.

It should be noted that the drawings are not to precise scale and may be exaggerated in thickness of lines or size of components for descriptive convenience and clarity only.

Furthermore, the terms used herein are defined by taking functions of the present disclosure into account and can be changed according to the custom or intention of users or operators.

Therefore, definition of the terms should be made according to the overall disclosure set forth herein.

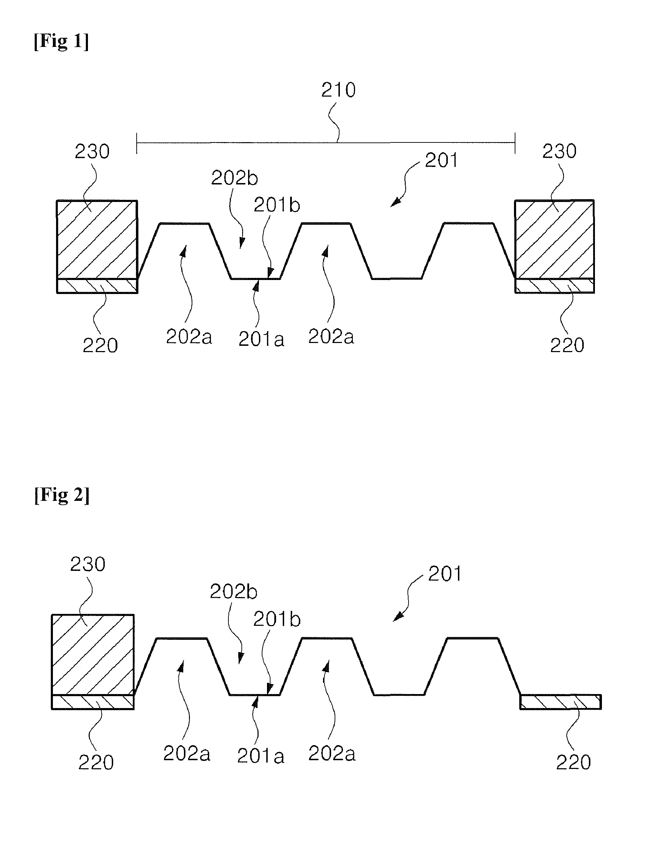

Fig. 1 to Fig. 4 are schematic sectional views of an air-cooled metal separator for a fuel cell in accordance with one exemplary embodiment of the present invention.

The air-cooled metal separator according to the exemplary embodiment includes a channel section 210, a first gasket 220, and a second gasket 230.

The channel section 210 is formed in the middle of a metal plate 201, and includes reaction gas channels 202a depressed into a front surface 201 a of the metal plate 201 to protrude from the rear surface 201 b thereof, and air channels 202b formed between the reaction gas channels 202a protruding from the rear surface 201b of the metal plate.

The first gasket 220 is continuously formed along a rim of the front surface 201a of the channel section 210 to ensure air-tightness of the reaction gas channel 202a.

The second gasket 23 is discontinuously formed along a rim of the rear surface 201b of the channel section 210 to support the metal separator in a stack while allowing air flow through the air channel 202b.

Fig. 1 to Fig. 4 show cross-sections of the metal plate taken in a width direction.

Fig. 1 illustrates the first gasket 220 as being formed on the front surface 201a at either side of the channel section 210, and the second gasket 230 as being formed on the rear surface 201b at either side of the channel section 210.

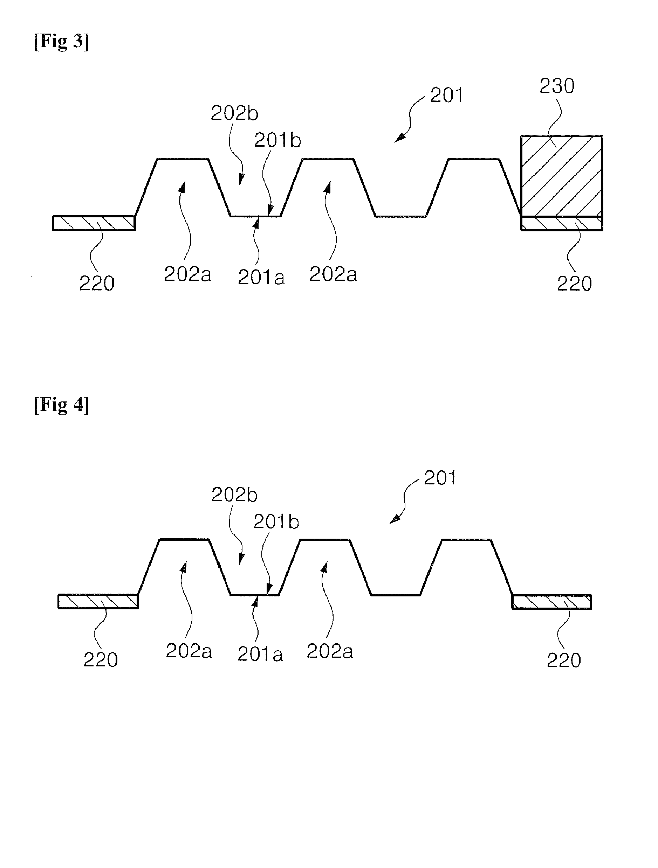

Figs. 2 and 3 illustrate the first gasket 220 as being formed on the front surface 201a at either side of the channel section 210, and the second gasket 230 as being formed only on the rear surface 201b at one side of the channel section 210.

Fig. 4 illustrates the first gasket 220 as being formed on the front surface 201a at either side of the channel section 210, and the second gasket 230 as being not present on the rear surface 201b of the channel section 210.

Since the first gasket 220 formed on the front surface 201 a at either side of the channel section 210 secures air-tightness of the channel section, it is necessary for the first gasket 220 to be continuously formed in a longitudinal direction of the metal separator.

On the other hand, the second gasket 230 formed on the rear surface 201b at either side of the channel section 210 may be omitted in consideration of characteristics of the air-cooled separator. However, when the separator does not include the second gasket 230, the separator is likely to be deformed since the rim of the channel section is not supported when sequentially stacking the metal separators and a membrane electrode assembly to fabricate a fuel cell stack. Accordingly, the second gasket 230 is discontinuously formed on the rear surface at either side of the channel section 210 to support the metal separator without obstructing air flow within the air channel.

As such, the second gasket 230 may be symmetrically formed at either side of the metal separator in the longitudinal direction of the metal plate. Alternatively, the second gasket 230 may be non-symmetrically formed at either side of the metal separator in the longitudinal direction of the metal plate.

A conventional water-cooled metal separator requires continuous supply of cooling water to a cooling water channel to remove heat caused by activation loss in operation of the fuel cell, reduction at a cathode of the fuel cell, Joule heating, and the like. On the contrary, according to the embodiment of the invention, the air-cooled metal separator is configured to remove heat through air cooling and thus does not need supply of cooling water, and the gasket on the rear surface of the separator serves to prevent deformation of the separator by supporting the separator, instead of providing air-tightness. In the gasket on the rear surface of the separator, a discontinuous section constitutes a flow passage of air.

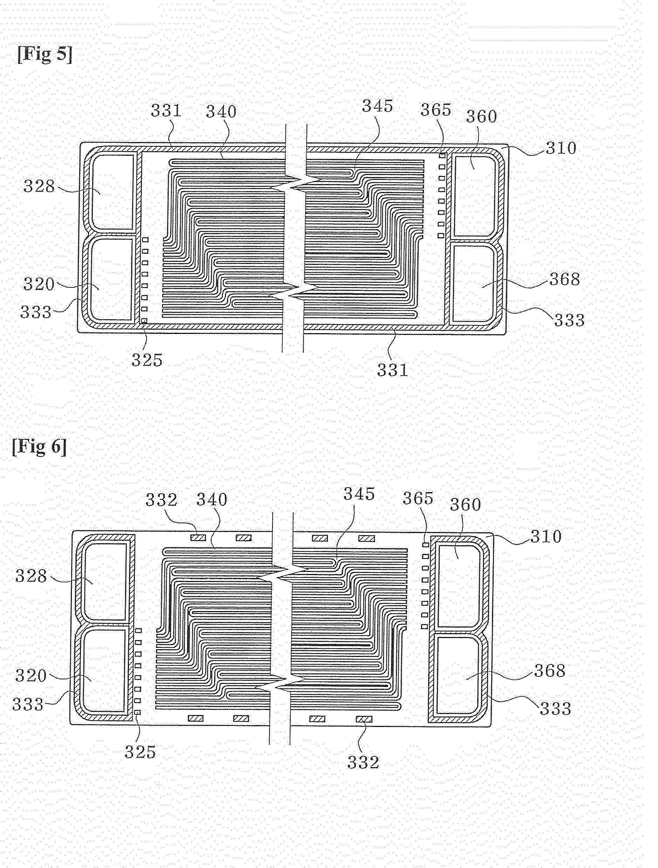

Fig. 5 to Fig. 6 are a top view and a bottom view of an air-cooled metal separator in accordance with one exemplary embodiment of the present invention.

First, referring to Fig. 5 showing the front surface of the air-cooled metal separator on which reaction gas flows, a metal plate 310 is formed in the middle thereof with a channel section including a reaction gas channel 340 and an air channel 345, and a first gasket 331 is continuously formed to surround a rim of the channel section. Here, in Figs. 5 and 6, part of the rectangular metal plate 310 is omitted in the longitudinal direction.

The reaction gas channel 340 is formed by stamping the metal plate to be depressed into the front surface of the metal plate to protrude from the rear surface thereof, and the air channel 345 is formed between the reaction gas channels 340 which protrude from the rear surface of the metal plate. The air channel 345 may be formed using a region between the reaction gas channels 340 on the metal plate 310. Alternatively, the air channel 345 may be formed by stamping the metal plate 310 such that a region between the reaction gas channels 340 protrudes from the front surface of the metal plate 310.

Through the channel section, the reaction gas flows on the front surface of the metal plate 310 and air flows on the rear surface of the metal plate.

Next, referring to Fig. 6 showing the rear surface of the air-cooled metal separator on which air flows, the channel section is discontinuously formed at either side thereof with a second gasket 332. That is, since the goal of the first gasket 331 is to prevent leakage of the reaction gas, the first gasket 331 is continuously formed, and since the goal of the second gasket 332 is to support the separator without providing air-tightness, the second gasket 332 is discontinuously formed.

Although the second gaskets 332 are illustrated as being symmetrically formed at both sides of the channel section, it should be noted that the second gaskets 332 may be non-symmetrically formed.

Referring to Figs. 5 and 6, the channel section may be formed at opposite sides thereof with reaction gas manifolds each being formed with an opening and including a reaction gas inflow manifold, which is formed at one side of the channel section in the longitudinal direction thereof and through which a reaction gas is introduced into the reaction gas channel 340, and a reaction gas discharge manifold, which is formed at the other side of the channel section in the longitudinal direction thereof and through which the reaction gas is discharged to the outside from the reaction gas channel 340. Since the air-cooled metal separator according to the embodiment of the invention removes heat through air cooling, it does not need a cooling water inflow manifold or a cooling water discharge manifold.

Specifically, the reaction gas inflow manifold includes an oxygen inflow manifold 320 and a hydrogen inflow manifold 328 partitioned from each other, and a reaction gas inflow hole 325 is formed between the oxygen inflow manifold 320 or the hydrogen inflow manifold 328 and the channel section. Likewise, the reaction gas discharge manifold includes an oxygen discharge manifold 360 and a hydrogen discharge manifold 368 partitioned from each other, and a reaction gas discharge hole 365 is formed between the hydrogen discharge manifold 368 or the oxygen discharge manifold 360 and the channel section.

In order to form the oxygen and hydrogen inflow manifolds 320, 328 in the reaction gas inflow manifold, openings partitioned from each other are formed in the metal plate 310 and used to form the partitioned manifolds. Alternatively, an integral polymer frame may be used to form the partitioned manifolds. These processes may also be applied to formation of the oxygen discharge manifold 360 and the hydrogen discharge manifold 368 partitioned from each other in the reaction gas discharge manifold.

Further, a third gasket 333 is continuously formed along a rim of each of front and rear surfaces of the reaction gas inflow manifold and the reaction gas discharge manifold to prevent leakage of oxygen gas and hydrogen gas from the reaction gas manifolds. The third gasket 333 may be formed of the same material as that of the first gasket 331 or the second gasket 332, and may be formed together with the first gasket 331 or the second gasket 332 through injection molding.

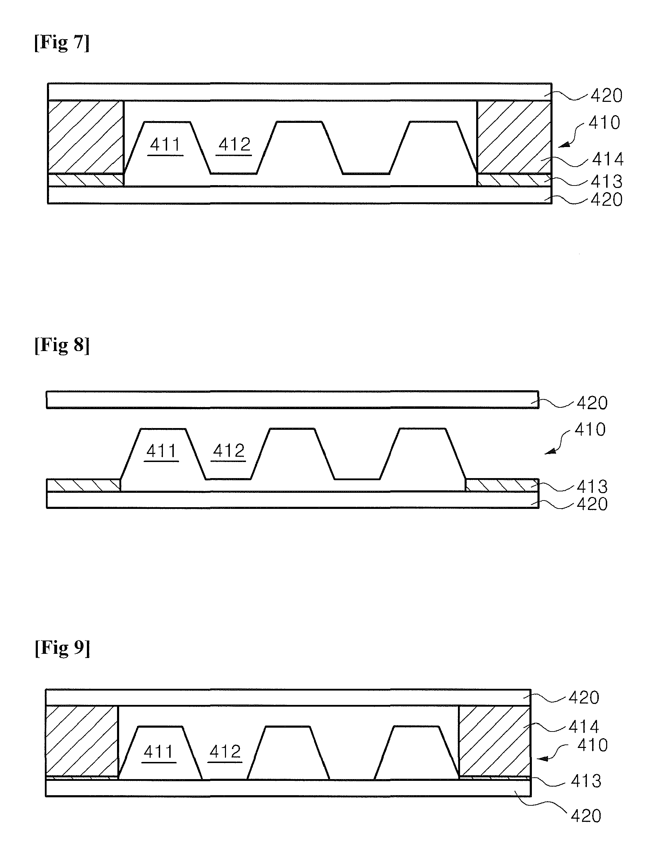

Fig. 7 to 12 are sectional views of fuel cell stacks including air-cooled metal separators according to exemplary embodiments of the present invention.

Figs. 7 to 10 show a fuel cell stack which includes a single air-cooled metal separator and two membrane electrode assemblies (MEAs) sequentially stacked one above another, and Figs. 11 and 12 shows a fuel cell stack which includes a separator structure and two MEAs sequentially stacked one above another, in which two air-cooled metal separators 410a, 410b are bonded to each other to constitute the separator structure, with front surfaces thereof disposed to face each other.

Referring to Figs. 7 and 8, the fuel cell stack is formed by sequentially stacking a metal separator 410 and membrane electrode assemblies 420. The metal separator 410 includes gaskets formed along rims of a channel section through which reaction gas and air flow. Specifically, the metal separator 410 includes a first gasket 413 continuously formed on the front surface thereof and a second gasket 414 discontinuously formed on the rear surface thereof. Fig. 7 shows a part of the fuel cell stack which is formed with the second gasket 414 and Fig. 8 shows a part of the fuel cell stack, which is not formed with the second gasket 414.

As described above, the first gasket 413 on the front surface of the separator is continuously formed in order to prevent leakage of reaction gas by providing air-tightness to the reaction gas channel 411. On the other hand, the second gasket 414 on the rear surface of the separator is discontinuously formed in order to support the membrane electrode assembly 420 without obstructing air flow through the air channel 412.

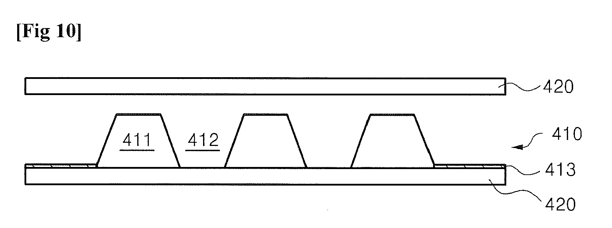

In the embodiment shown in Figs. 7 and 8, a passage is defined between the reaction gas channels 411 by the first gasket 413, and in the embodiment shown in Fig. 9 and 10, the thickness of the first gasket 413 is reduced as much as possible such that a passage is not formed between the reaction gas channels 411.

The configuration wherein the passage is not present between the reaction gas channels 411 may be obtained by stamping the metal plate from the front surface of the metal plate towards the rear surfaces thereof to form the reaction gas channel 411 or by stamping the metal plate from the rear surface thereof towards the front surface thereof to form the air channel. The configuration of forming the passage between the reaction gas channels 411 or the configuration of sealing the respective reaction gas channels 411 may be selected according to use condition of the metal separator.

Although not shown in the figures, the fuel cell stack may further include a gas diffusion layer, which is a porous medium and formed between the front surface of the metal separator 410 and the membrane electrode assembly 420 to permit uniform distribution of the reaction gas on the surface of the membrane electrode assembly 420 while the reaction gas flows along the reaction gas channel 411.

Although the present invention has been described with reference to some exemplary embodiments, it should be understood that these embodiments are given by way of illustration only and do not limit the scope of the invention, and that various modifications, variations, and alterations can be made by a person having ordinary knowledge in the art without departing from the scope of the invention. Therefore, the scope of the invention should be limited only by the accompanying claims and equivalents thereof.

## Claims

1. An air-cooled metal separator for a fuel cell, comprising:
a channel section formed in a middle of a metal plate (310), the channel section including a reaction gas channel (340) depressed into a front surface of the metal plate (310) to protrude from a rear surface thereof and a cooling air channel (345) defined between the reaction gas channels (340) protruding from the rear surface of the metal plate; and
a first gasket (331) continuously formed along a rim of a front surface of the channel section,
**characterized by**
a second gasket (332) discontinuously formed along a rim of a rear surface of the channel section to allow a discontinuous portion of the second gasket (332) to provide a flow passage of cooling air.

2. The metal separator of claim 1, wherein the metal plate (310) is formed at opposite sides thereof with reaction gas manifolds each being formed with an opening, the reaction gas manifolds comprising a reaction gas inflow manifold (320, 328) through which a reaction gas is introduced into the reaction gas channel, and a reaction gas discharge manifold (360, 368) through which the reaction gas is discharged outside from the reaction gas channel.

3. The metal separator of claim 2, further comprising:
a third gasket (333) continuously formed along a rim of each of front and rear surfaces of the reaction gas inflow manifold (320, 328) and the reaction gas discharge manifold (360, 368).

4. The metal separator of claim 2, wherein a reaction gas inflow hole is formed between the channel section and the reaction gas inflow manifold (320, 328), and a reaction gas discharge hole is formed between the channel section and the reaction gas discharge manifold (360, 368).

5. The metal separator of claim 2, wherein each of the reaction gas inflow manifold (320, 328) and the reaction gas discharge manifold (360, 368) is partitioned into a manifold for oxygen gas (320, 360) and a manifold for hydrogen gas (328, 368).

6. A fuel cell stack comprising the metal separator of any one of claims 1 to 5 and a membrane electrode assembly (MEA) (420) sequentially stacked one above another.

## Patentansprüche

1. Luftgekühlter Metallseparator für eine Brennstoffzelle, mit:
einem in einer Mitte einer Metallplatte (310) ausgebildeten Kanalabschnitt, der einen Reaktionsgaskanal (340) beinhaltet, der in eine Vorderfläche der Metallplatte (310) gedrückt ist, um von einer Hinterfläche davon vorzuragen, und der einen Kühllufkanal (345) beinhaltet, der zwischen den Reaktionsgaskanälen (340), die von der Hinterfläche der Metalplatte (310) vorragen, definiert ist; und
einer ersten Dichtung (331), die kontinuierlich entlang eines Randes von einer Vorderfläche des Kanalabschnitts ausgebildet ist,
**gekennzeichnet durch**,
eine zweite Dichtung (332), die diskontinuierlich entlang eines Randes von einer Hinterfläche des Kanalabschnitts ausgebildet ist, um einem diskontinuierlichen Abschnitt der zweiten Dichtung (332) zu ermöglichen, eine Strömungspassage von Kühlluft bereitzustellen.

2. Luftgekühlter Metallseparator nach Anspruch 1, wobei die Metallplatte (310) an ihren gegenüberliegenden Seiten mit Reaktionsgasverteilern ausgestattet ist, die jeweils mit einer Öffnung ausgebildet sind, wobei die Reaktionsgasverteiler einen Reaktionsgaseinlassverteiler (320, 328) beinhalten, durch den ein Reaktionsgas dem Reaktionsgaskanal zugeführt wird, und einen Reaktionsgasauslassverteiler (360, 368) beinhalten, durch den das Reaktionsgas aus dem Reaktionsgaskanal hinaus freigesetzt wird.

3. Luftgekühlter Metallseparator nach Anspruch 2, mit weiterhin
einer dritten Dichtung (333), die kontinuierlich entlang eines Randes von jeder der Vorderfläche und der Hinterfläche des Reaktionsgaseinlassverteilers (320, 328) und des Reaktionsgasauslassverteilers (360, 368) ausgebildet ist.

4. Luftgekühlter Metallseparator nach Anspruch 2, wobei ein Reaktionsgaseinlassloch zwischen dem Kanalabschnitt und dem
Reaktionsgaseinlassverteiler (320, 328) ausgebildet ist, und wobei ein Reaktionsgasauslassloch zwischen dem Kanalabschnitt und dem Reaktionsgasauslassverteiler (360, 368) ausgebildet ist.

5. Luftgekühlter Metallseparator nach Anspruch 2, wobei jeder von dem Reaktionsgaseinlassverteiler (320, 328) und dem Reaktionsgasauslassverteiler (360, 368) in einen Verteiler für Sauerstoffgas (320, 360) und einen Verteiler für Wasserstoffgas (328, 368) aufgeteilt ist.

6. Brennstoffzellenstack mit einem Metallseparator nach einem der Ansprüche 1 bis 5 und einer Membran-Elektroden-Einheit (MEA) (420) die sequentiell eine auf die andere gestapelt ist.

## Revendications

1. Séparateur métallique refroidi par air pour une pile à combustible, comprenant :
une section de canaux formée au milieu d'une plaque métallique (310), la section de canaux comprenant un canal de gaz de réaction (340) enfoncé dans une surface avant de la plaque métallique (310) de manière à faire saillie d'une surface arrière de celle-ci et un canal d'air de refroidissement (345) défini entre les canaux de gaz de réaction (340) faisant saillie de la surface arrière de la plaque métallique ; et
un premier joint (331) formé de manière continue le long d'un bord d'une surface avant de la section de canaux,
**caractérisé par**
un deuxième joint (332) formé de manière discontinue le long d'un bord d'une surface arrière de la section de canaux pour permettre à une partie discontinue du deuxième joint (332) de réaliser un passage d'écoulement d'air de refroidissement.

2. Séparateur métallique selon la revendication 1, dans lequel la plaque métallique (310) est formée, au niveau de ses côtés opposés, avec des collecteurs de gaz de réaction comportant chacun une ouverture, les collecteurs de gaz de réaction comprenant un collecteur d'entrée de gaz de réaction (320, 328) à travers lequel un gaz de réaction est introduit dans le canal de gaz de réaction, et un collecteur de décharge de gaz de réaction (360, 368) à travers lequel le gaz de réaction est déchargé à l'extérieur du canal de gaz de réaction.

3. Séparateur métallique selon la revendication 2, comprenant en outre :
un troisième joint (333) formé de manière continue le long d'un bord de chacune des surfaces avant et arrière du collecteur d'entrée de gaz de réaction (320, 328) et du collecteur de décharge de gaz de réaction (360, 368).

4. Séparateur métallique selon la revendication 2, dans lequel un orifice d'entrée de gaz de réaction est formé entre la section de canaux et le collecteur d'entrée de gaz de réaction (320, 328), et un orifice de décharge de gaz de réaction est formé entre la section de canaux et le collecteur de décharge de gaz de réaction (360, 368).

5. Séparateur métallique selon la revendication 2, dans lequel chacun du collecteur d'entrée de gaz de réaction (320, 328) et du collecteur de décharge de gaz de réaction (360, 368) est divisé en un collecteur pour l'oxygène gazeux (320, 360) et un collecteur pour l'hydrogène gazeux (328, 368).

6. Empilage de piles à combustible comprenant le séparateur métallique selon l'une quelconque des revendications 1 à 5 et un ensemble membrane-électrode (MEA) (420) empilés séquentiellement l'un au-dessus de l'autre.
